# EUROPÄISCHE PATENTANMELDUNG

(11) **EP 4 273 504 A1**
(43) Veröffentlichungstag der Anmeldung: **08.11.2023**
(21) Anmeldenummer: 23169709.5
(22) Anmeldetag: 25.04.2023
(51) Int. Cl.: G01C 21/34

(54) **VERFAHREN UND ENDGERÄT ZUM BETREIBEN EINES KRAFTRADS IN EINER GRUPPE VON KRAFTRÄDERN**

(30) Priorität: 04.05.2022 DE 102022204372
(71) Anmelder: Robert Bosch GmbH, 70442 Stuttgart (DE)
(72) Erfinder: Mayer, Florian, 71254 Ditzingen (DE); Cosyns, Christian, 31228 Peine (DE); Rossbach, Andre Christian, 71711 Steinheim (An Der Murr) (DE)

(57) **Zusammenfassung**

Die vorliegende Erfindung bezieht sich auf ein Verfahren zum Betreiben eines Kraftrads (106) in einer Gruppe (104) von Krafträdern (106), wobei eine für das Kraftrad (106) vordefinierte Einschränkungscharakteristik (108) mit einer Streckencharakteristik (112) von Streckenabschnitten (110) auf einer geplanten Route (102) der Gruppe (104) verglichen wird, wobei für das Kraftrad (106) eine die Einschränkungscharakteristik (108) aufweisende Alternativroute (100) um zumindest einen Streckenabschnitt (110) herum geplant wird, wenn die Streckencharakteristik (112) des Streckenabschnitts (110) und die Einschränkungscharakteristik (108) inkompatibel sind.

## Beschreibung

### Gebiet der Erfindung

Die Erfindung betrifft ein Verfahren zum Betreiben eines Kraftrads in einer Gruppe von Krafträdern, ein entsprechendes Endgerät sowie ein entsprechendes Computerprogrammprodukt.

### Stand der Technik

Beim Fahren in einer Gruppe von Krafträdern kann die Gruppe nur eine Route fahren, die einem Können des schwächsten Fahrers der Gruppe entspricht, beziehungsweise welche von allen Krafträdern der Gruppe befahren werden kann.

### Offenbarung der Erfindung

Vor diesem Hintergrund werden mit dem hier vorgestellten Ansatz ein Verfahren zum Betreiben eines Kraftrads in einer Gruppe von Krafträdern, ein entsprechendes Endgerät, sowie ein entsprechendes Computerprogrammprodukt gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Bei dem hier vorgestellten Ansatz wird abschnittsweise nach einer Alternativroute für zumindest ein Kraftrad einer Gruppe von Krafträdern gesucht, wenn eine gewählte Route der Gruppe nicht zu einem Routenwunsch eines Fahrers des Kraftrads passt, nicht zu einem Fahrkönnen des Fahrers passt und/oder nicht für das Kraftrad geeignet ist.

Durch den hier vorgestellten Ansatz können unterschiedliche Krafträder und Fahrer mit unterschiedlichem Können und/oder Routenwünschen in einer Gruppe zumindest abschnittsweise gemeinsam eine Route fahren. Unpassende Abschnitte werden von den Krafträdern umfahren, zu denen diese Abschnitte nicht passen. Nach den unpassenden Abschnitten trifft die Gruppe wieder zusammen und fährt gemeinsam weiter auf der Route.

Es wird ein Verfahren zum Betreiben eines Kraftrads in einer Gruppe von Krafträdern vorgeschlagen, wobei eine für das Kraftrad vordefinierte Einschränkungscharakteristik mit einer Streckencharakteristik von Streckenabschnitten auf einer geplanten Route der Gruppe verglichen wird, wobei für das Kraftrad eine die Einschränkungscharakteristik aufweisende Alternativroute um einen Streckenabschnitt herum geplant wird, wenn die Streckencharakteristik des Streckenabschnitts und die Einschränkungscharakteristik inkompatibel sind.

Ideen zu Ausführungsformen der vorliegenden Erfindung können unter anderem als auf den nachfolgend beschriebenen Gedanken und Erkenntnissen beruhend angesehen werden.

Ein Kraftrad kann ein angetriebenes Zweirad sein. Das Kraftrad kann beispielsweise ein Motorrad, Mokick oder ein Motorroller sein. Das Kraftrad kann einen elektrischen Antrieb oder einen Verbrennungsmotor aufweisen.

Eine Gruppe von Krafträdern kann aus unterschiedlichen Krafträdern bestehen. Für jedes Kraftrad kann eine Einschränkungscharakteristik vorgegeben werden. Die Einschränkungscharakteristik bildet Eigenschaften des Kraftrads und/oder Eigenschaften eines Fahrers des Kraftrads ab. Die Einschränkungscharakteristik bildet vorgewählte Einschränkungen für das Kraftrad und/oder vorgewählte Einschränkungen für den Fahrer ab. Die Einschränkungscharakteristik repräsentiert also, welche Straßen ein bestimmter Fahrer mit einem bestimmten Kraftrad nicht fahren kann und/oder will. Die Einschränkungscharakteristik kann beispielsweise eine Bauart des Kraftrads abbilden. Die Einschränkungscharakteristik kann eine Motorisierung des Kraftrads abbilden. Die Einschränkungscharakteristik kann eine Lärmemission des Kraftrads abbilden. Die Einschränkungscharakteristik kann Fahreigenschaften des Kraftrads abbilden. Beispielsweise kann die Einschränkungscharakteristik einen minimalen Kurvenradius des Kraftrads und/oder einen maximalen Schräglagewinkel des Kraftrads abbilden. Die Einschränkungscharakteristik kann auch eine Bereifung des Kraftrads und eine Bodenfreiheit des Kraftrads abbilden. Die Einschränkungscharakteristik kann ein Fahrkönnen des Fahrers abbilden. Ebenso kann die Einschränkungscharakteristik Erwartungen des Fahrers an die Route abbilden.

Ein Streckenabschnitt kann Anforderungen an das Kraftrad und/oder den Fahrer stellen. Eine Streckencharakteristik bildet die Anforderungen ab. Insbesondere bildet die Streckencharakteristik die Mindestanforderungen an den Fahrer und das Kraftrad ab, damit der Fahrer den Streckenabschnitt mit dem Kraftrad fahren kann. Die Streckencharakteristik kann beispielsweise einen schlechtesten Straßenbelag des Streckenabschnitts abbilden. Die Streckencharakteristik kann einen minimalen Kurvenradius auf dem Streckenabschnitt abbilden. Die Streckencharakteristik kann eine maximale Steigung und/oder ein maximales Gefälle auf dem Streckenabschnitt abbilden. Die Streckencharakteristik kann insbesondere einen Gesamtcharakter des Streckenabschnitts abbilden, also wie schwierig der Streckenabschnitt zu fahren ist. Die Streckencharakteristik kann besondere Hindernisse auf dem Streckenabschnitt, wie beispielsweise Wasserdurchfahrten abbilden. Die Streckencharakteristik kann auch Benutzungseinschränkungen auf dem Streckenabschnitt abbilden. Beispielsweise kann die Streckencharakteristik eine Lärmbegrenzung auf dem Streckenabschnitt abbilden. Ebenso kann die Streckencharakteristik Emissionsbeschränkungen auf dem Streckenabschnitt abbilden.

Wenn die Streckencharakteristik zumindest eines Streckenabschnitts auf der Route nicht zu der Einschränkungscharakteristik passt, wird eine Alternativroute über zumindest einen alternativen Streckenabschnitt geplant, bei dem die Streckencharakteristik zu der Einschränkungscharakteristik passt. Die Alternativroute kann länger, gleich lang oder kürzer als die ausgelassenen Streckenabschnitte sein.

Die Einschränkungscharakteristik kann unter Verwendung einer ein Fahrkönnen eines Fahrers des Kraftrads abbildenden Fahrerklasse des Fahrers vordefiniert werden. Eine Fahrerklasse kann beispielsweise Anfänger, Fortgeschrittener und Geübter sein. Der Fahrer kann sich selbst der Fahrerklasse zuordnen. Die Fahrerklasse kann sich durch Erfahrung, also über die Zeit und gefahrene Strecken verbessern. Die Fahrerklasse kann einen vorgewählten maximal gewollten Schwierigkeitsgrad abbilden.

Die Einschränkungscharakteristik kann unter Verwendung einer technische Restriktionen des Kraftrads abbildenden Kraftradklasse des Kraftrads vordefiniert werden. Eine Kraftradklasse kann beispielsweise Chopper, Tourer, Superbike oder Enduro sein. Die Kraftradklasse kann beispielsweise eine erwartete Lärmemission des Kraftrads abbilden. Ebenso kann die Kraftradklasse eine bauarttypische maximale Schräglage des Kraftrads abbilden.

Die Alternativroute kann mit einer Fahrzeit geplant werden, die einer Fahrzeit auf der Route zwischen einem Abzweigpunkt der Alternativroute von der Route und einem Einmündepunkt der Alternativroute in die Route im Wesentlichen entspricht. Die Alternativroute kann die Route an einem Abzweigepunkt verlassen und an einem Einmündepunkt wieder auf die Route treffen. Zwischen dem Abzweigpunkt und dem Einmündepunkt liegen die ausgelassenen Streckenabschnitte der Route und auch die alternativen Streckenabschnitte der Alternativroute. Die Alternativroute kann näherungsweise so lange zu fahren dauern, wie die Route zwischen dem Abzweigpunkt und dem Einmündepunkt. Durch näherungsweise gleiche Fahrzeiten können Wartezeiten für den Rest der Gruppe vermieden werden.

Es kann ferner eine die Einschränkungscharakteristik aufweisende Anfahrtsroute für das Kraftrad zu einem Startpunkt der Route geplant werden. Eine Anfahrtsroute kann von einem momentanen Standort des Kraftrads zu dem Startpunkt der Route führen. Die Anfahrtsroute kann über Streckenabschnitte führen, deren Streckencharakteristika zu der Einschränkungscharakteristik des Kraftrads passen.

Ein Abfahrtszeitpunkt zum Beginnen der Anfahrtsroute kann unter Verwendung eines geplanten Startzeitpunkts der Gruppe auf die Route bestimmt werden. Der Abfahrtszeitpunkt kann so gewählt werden, dass das Kraftrad den Startpunkt vor dem Startzeitpunkt erreicht. So kann Wartezeit für den Rest der Gruppe vermieden werden.

Alternativ kann der Startzeitpunkt der Gruppe auf die Route unter Verwendung eines gewünschten Abfahrtszeitpunkts zum Beginnen der Anfahrtsroute bestimmt werden. Insbesondere kann der Startzeitpunkt durch das Kraftrad mit der längsten Anfahrtsroute bestimmt werden. Alle anderen Abfahrtszeitpunkte der Gruppe können entsprechend passend zu dem Startzeitpunkt bestimmt werden. So können alle Mitglieder der Gruppe näherungsweise zur gleichen Zeit am Startpunkt eintreffen. Der gewünschte Abfahrtszeitpunkt kann beispielsweise durch eine zeitliche Beschränkung vorgegeben sein.

Der Abfahrtszeitpunkt zum Beginnen der Anfahrtsroute kann unter Verwendung einer gewünschten Länge der Anfahrtsroute geplant werden. Durch eine gewünschte Länge kann die Anfahrtsroute ausgedehnt werden. So kann eine vorgelagerte Tour gefahren werden. Die Länge der Anfahrtsroute kann als Strecke oder Zeit vorgewählt werden.

Die Anfahrtsroute kann mit einem Ankunftszeitpunkt innerhalb eines Toleranzbereichs vor einem geplanten Startzeitpunkt der Gruppe geplant werden. Durch einen zeitlich vorgelagerten Toleranzbereich kann ein verspäteter Start der Gruppe auf die Route vermieden werden. Der Toleranzbereich kann als Zeitpuffer bezeichnet werden.

Das Verfahren ist vorzugsweise computerimplementiert und kann beispielsweise in Software oder Hardware oder in einer Mischform aus Software und Hardware beispielsweise in einem Steuergerät implementiert sein.

Der hier vorgestellte Ansatz schafft ferner ein Endgerät, das dazu ausgebildet ist, um die Schritte einer Variante des hier vorgestellten Verfahrens in entsprechenden Einrichtungen durchzuführen, anzusteuern bzw. umzusetzen. Das Endgerät kann beispielsweise ein Mobilgerät eines Fahrers eines Kraftrads sein. Ebenso kann das Endgerät ein Navigationssystem des Kraftrads sein.

Das Endgerät kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des Steuergeräts und des Verfahrens in geeigneter Weise kombiniert, angepasst oder ausgetauscht werden können, um zu weiteren Ausführungsformen der Erfindung zu gelangen.

### Kurze Beschreibung der Zeichnung

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Darstellung von Alternativrouten zu einer Route einer Gruppe von Krafträdern; und
Fig. 2 zeigt eine Darstellung von Anfahrtsrouten zu einem Startpunkt einer Route einer Gruppe von Krafträdern.

Die Figuren sind lediglich schematisch und nicht maßstabsgetreu. Gleiche Bezugszeichen bezeichnen gleiche oder gleichwirkende Merkmale.

### Ausführungsformen der Erfindung

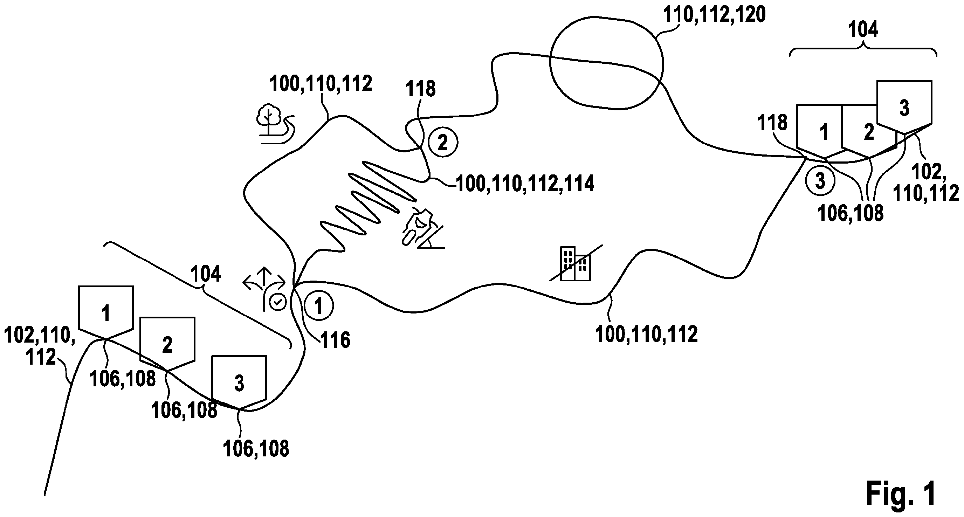

Fig. 1 zeigt eine Darstellung von Alternativrouten 100 zu einer Route 102 einer Gruppe 104 von Krafträdern 106. Für jedes Kraftrad 106 ist eine individuelle Einschränkungscharakteristik 108 vordefiniert. Die Einschränkungscharakteristika 108 der Krafträder 106 bilden unterschiedliche technische Voraussetzungen der Krafträder 106 ab. Ebenso bilden die Einschränkungscharakteristika 108 unterschiedliche fahrerische Voraussetzungen von Fahrern der Krafträder 106 ab. Diese Voraussetzungen definieren für jedes Kraftrad 106 individuelle Einschränkungen bei der Routenwahl. Diese Einschränkungen sind in der individuellen Einschränkungscharakteristik 108 für jedes Kraftrad 106 hinterlegt.

Beispielsweise kann in der Einschränkungscharakteristik 108 eine maximal mögliche Schräglage des Kraftrads 106 beziehungsweise ein minimaler Kurvenradius des Kraftrads 106 hinterlegt sein. Ebenso kann in der Einschränkungscharakteristik 108 eine Lärmemission des Kraftrads 106 hinterlegt sein. Weiterhin kann in der Einschränkungscharakteristik 108 ein Fahrkönnen des Fahrers hinterlegt sein. In der Einschränkungscharakteristik 108 kann auch hinterlegt sein, welchen Routencharakter der Fahrer bevorzugt.

Die Route 102 führt über Streckenabschnitte 110. Jedem Streckenabschnitt 110 ist eine Streckencharakteristik 112 zugeordnet. Die Streckencharakteristika 112 bilden Eigenschaften der Streckenabschnitte 110 ab.

Beispielsweise kann in der Streckencharakteristik 112 ein minimaler Kurvenradius des Streckenabschnitts 110 hinterlegt sein. Ebenso kann eine Lärmbegrenzung auf dem Streckenabschnitt 110 in der Streckencharakteristik 112 hinterlegt sein. Auch kann eine Schwierigkeitsbewertung des Streckenabschnitts 110 in der Streckencharakteristik 112 hinterlegt sein. Eine Kurvigkeit des Streckenabschnitts 110 kann in der Streckencharakteristik 112 hinterlegt sein. Ein Fahrbahnbelag und ein Zustand des Fahrbahnbelags des Streckenabschnitts 110 können in der Streckencharakteristik 112 hinterlegt sein. Auch spezielle Hindernisse, wie beispielsweise eine Wasserdurchfahrt können in der Streckencharakteristik 112 hinterlegt sein.

Bei dem hier vorgestellten Ansatz werden für jedes Kraftrad 106 die Streckencharakteristika 112 der Streckenabschnitte 110 der Route 102 mit der Einschränkungscharakteristik 108 des Kraftrads 106 verglichen. Wenn die Streckencharakteristika 112 nicht zu der Einschränkungscharakteristik 108 passen, wird eine Alternativroute 100 um die betroffenen Streckenabschnitte 110 herum geplant. Die Alternativroute 100 wird dabei auf Streckenabschnitten 110 geplant, deren Streckencharakteristika 112 zu der Einschränkungscharakteristik 108 des betroffenen Kraftrads 106 passen.

In einem Ausführungsbeispiel führt die Route 102 über eine Serpentinenstrecke 114. Die Einschränkungscharakteristik 108 zumindest eines der Krafträder 106 ist nicht kompatibel zur Streckencharakteristik 112 der Serpentinenstrecke 114. Beispielsweise ist die Serpentinenstrecke 114 für den Fahrer zu schwierig bewertet. Ebenso kann das Kraftrad 106 einen zu großen minimalen Kurvenradius oder eine zu geringe maximale Schräglage aufweisen. Ebenso kann der Fahrer in der Einschränkungscharakteristik 108 vermerkt haben, dass er keine Lust auf Serpentinen hat und lieber über Alleen fahren will. Daher wird eine die Serpentinenstrecke 114 umgehende Alternativroute 100 für das Kraftrad 106 geplant. Das Kraftrad 106 verlässt die Route 102 an einem Abzweigpunkt 116. Über die Alternativroute 100 trifft das Kraftrad 106 nach der Serpentinenstrecke 114 an einem Einmündepunkt 118 wieder auf die Route 102.

In einem Ausführungsbeispiel führt die Route 102 durch eine Stadt 120. Die Einschränkungscharakteristik 108 zumindest eines der Krafträder 106 ist nicht kompatibel zur Streckencharakteristik 112 des Streckenabschnitts 110 durch die Stadt 120. Beispielsweise ist das Kraftrad 106 zu laut für die Stadt 120 und/oder darf nicht in die Umweltzone einfahren. Ebenso kann der Fahrer in der Einschränkungscharakteristik 108 vermerkt haben, dass er keine Lust auf Stadtfahrten hat und lieber an Kuhweiden entlangfahren will. Daher wird eine die Stadt 120 umgehende Alternativroute 100 für das Kraftrad 106 geplant. Das Kraftrad 106 verlässt die Route 102 an einem Abzweigpunkt 116. Über die Alternativroute 100 trifft das Kraftrad 106 nach der Stadt 116 an einem Einmündepunkt 118 wieder auf die Route 102.

In einem Ausführungsbeispiel wird die Alternativroute 100 so geplant, dass eine Fahrzeit über die Alternativroute 100 im Wesentlichen der Fahrzeit über die Route 102 zwischen dem Abzweigpunkt 116 und dem Einmündepunkt 118 entspricht. Dazu wird eine Länge der Alternativroute 100 so gewählt, dass sich bei einer der Einschränkungscharakteristik 108 entsprechenden Fahrweise die passende Fahrzeit ergibt. Insbesondere wird die Alternativroute 100 etwas kürzer gewählt, damit das Kraftrad 106 den Einmündepunkt 118 früher als die Gruppe 104 erreicht und die Gruppe 104 nicht warten muss.

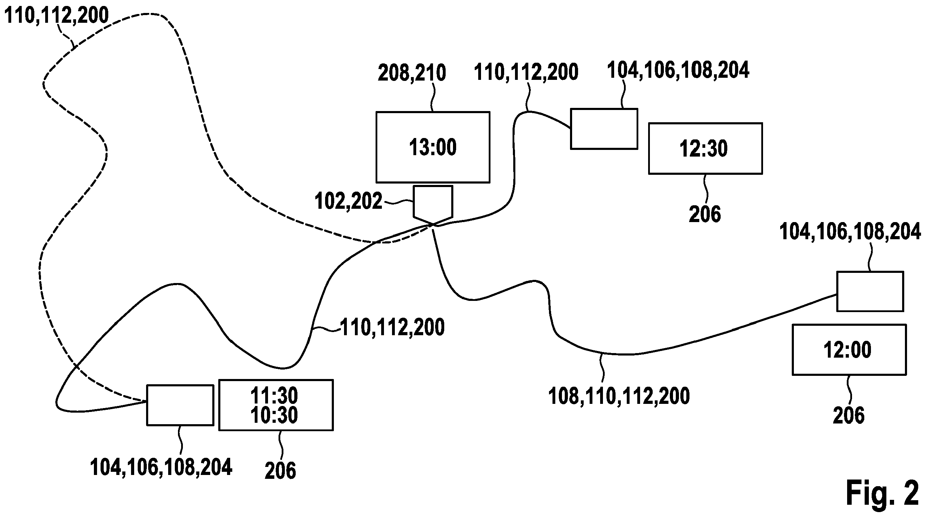

Fig. 2 zeigt eine Darstellung von Anfahrtsrouten 200 zu einem Startpunkt 202 einer Route 102 einer Gruppe 104 von Krafträdern 106. Der Startpunkt 202 entspricht einem Treffpunkt von zumindest zwei Gruppenmitgliedern der Gruppe 104. Andere Gruppenmitglieder können später im Verlauf der Route 102 dazu stoßen. Auch für diese Gruppenmitglieder können Anfahrtsrouten 200 zu Zwischenpunkten der Route 102 geplant werden. Alternativ können sich alle Gruppenmitglieder am Startpunkt 202 treffen und von dort auf die Route 102 starten.

Die Anfahrtsroute 200 wird von einer Position 204 des Kraftrads 106 geplant. Dabei wird die Anfahrtsroute 200 über Streckenabschnitte 110 geplant, deren Streckencharakteristika 112 zur Einschränkungscharakteristik 108 des Kraftrads 106 passen.

In einem Ausführungsbeispiel wird ein Abfahrtszeitpunkt 206 an der Position 204 so geplant, dass das Kraftrad 106 den Startpunkt 202 bei einer der Einschränkungscharakteristik 108 entsprechenden Fahrweise kurz vor einem Startzeitpunkt 208 der Gruppe 104 erreicht.

In einem Ausführungsbeispiel wird der Startzeitpunkt 208 durch einen Ankunftszeitpunkt 210 eines der Krafträder 106 am Startpunkt 202 festgelegt. Dabei ergibt sich der Ankunftszeitpunkt 210 aus dem festen Abfahrtszeitpunkt 206, einer Länge der Anfahrtsroute 200 und der in der Einschränkungscharakteristik 108 hinterlegten Fahrweise des Fahrers. Der Startzeitpunkt 208 beeinflusst damit die Abfahrtszeitpunkte 206 aller Gruppenmitglieder. Insbesondere wird der Startzeitpunkt 208 in Abhängigkeit von der längsten Anfahrtsroute 200 festgelegt. Für kürzere Anfahrtsrouten 200 werden dann entsprechend die Abfahrtszeitpunkte 206 berechnet.

In einem Ausführungsbeispiel wird die Länge der Anfahrtsroute 200 vorgegeben und dementsprechend ein zum Startzeitpunkt 208 passender Abfahrtszeitpunkt 206 berechnet. So kann der gemeinsamen Tour eine Vortour vorgelagert werden.

In einem Ausführungsbeispiel wird die Länge der Anfahrtsroute 200 so berechnet, dass die Anfahrtsroute 200 an einem gewünschten Abfahrtszeitpunkt 206 begonnen wird und der Startpunkt 202 kurz vor dem Startzeitpunkt 208 erreicht wird.

Nachfolgend werden mögliche Ausgestaltungen der Erfindung nochmals zusammengefasst bzw. mit einer geringfügig anderen Wortwahl dargestellt.

Es wird eine optimierte Routenführung für Gruppenfahrten zur personalisierten Routenführung und Navigation nach Streckenklassifizierung vorgestellt.

Motorradfahrer können während der Fahrt entweder mit dem Fahrzeug oder untereinander kommunizieren. Motorradfahrer können über besonders kurvige Routen geführt werden.

Bei dem hier vorgestellten Ansatz kann ein Fahrer allein oder in einer Gruppe eine bestimmte Route nach seinem fahrerischen Können und/oder seinem Fahrzeugtyp auswählen. So kann ein Fahranfänger beispielsweise eine weniger anspruchsvolle Route wählen. Ebenfalls kann ein Fahrer eines Sportmotorrads eine Strecke ohne Schotter oder Wasserdurchfahrten wählen.

Im Zusammenhang mit einem Gruppenerlebnis bzw. einer gemeinsamen Gruppe in der unterschiedliche Fahrer und Fahrzeuge teilnehmen können, dient diese Funktion dazu, dem Fahrer die Möglichkeit zu geben, in einer gemeinsamen Tour an einem bestimmten Punkt auf eine andere Route zu wechseln, um einen bestimmten Teil der Route zu Umfahren, aber auch mit der Möglichkeit an einem bestimmten Punkt auch wieder auf die gemeinsame Route zurückzukommen, mit dem Ziel dass dabei nach Möglichkeit kein Teilnehmer auf einen anderen warten muss. Hierzu wird zusätzlich eine Information über den Fahrzeugtyp und/oder das fahrerische Können verwendet. Die Information kann manuell eingegeben werden oder automatisch über eine Datenschnittstelle erfasst werden.

Nachdem sich alle Teilnehmer auf eine Tour geeinigt haben, können die Teilnehmer die Route an ihre persönlichen Bedürfnisse anpassen.

Wenn ein Fahrer bestimmte Streckenabschnitte wegen seines fahrerischen Könnens umfahren will, kann er dies in der Planungsphase manuell anpassen oder es kann auf der Tour automatisch vorgeschlagen werden. Dies kann dem Prinzip der Streckenklassifizierung folgen, wie es im Wintersport bereits bekannt ist. So können beispielsweise Abschnitte, die einfach zu fahren sind, in Grün markiert sein. Abschnitte die anspruchsvoll sind, können beispielsweise in Schwarz markiert sein.

In Fig. 1 ist der Fahrer 1 ein Fahranfänger und fährt bevorzugt einfache Strecken. Daher verlässt er die gemeinsame Route an Punkt 1 und kommt auf diese an Punkt 3 wieder zurück. Dabei wird die Alternativroute so berechnet, dass er optimalerweise zum gleichen Zeitpunkt an Punkt 3 ankommt, an dem Fahrer 2 & 3 an Punkt 3 ankommen.

Fahrer 2 ist ein routinierter Fahrer und fährt bevorzugt auf Strecken die maximal mit einem mittleren Schwierigkeitsgrad deklariert sind. Er verlässt die gemeinsame Route an Punkt 1 und kommt auf diese an Punkt 2 wieder zurück. Dabei wird die Alternativroute so berechnet, dass er optimalerweise zum gleichen Zeitpunkt an Punkt 2 ankommt, an dem Fahrer 3 an Punkt 2 ankommt. An Punkt 3 kommen dann alle Fahrer gemeinsam an.

Fahrer 3 ist ein erfahrener Fahrer und fährt bevorzugt auf herausfordernden Strecken aller Schwierigkeitsgrade. Er verlässt die gemeinsame Route an Punkt 1 und kommt auf diese an Punkt 2 wieder zurück. Optimalerweise zum gleichen Zeitpunkt bei dem Fahrer 2 an Punkt 2 ankommt. An Punkt 3 kommen dann alle Fahrer gemeinsam an.

Wenn ein Fahrer bestimmte Streckenabschnitte wegen seinem Fahrzeugtyp umfahren will, kann er dies in der Planungsphase manuell anpassen oder es kann ihm auf der Tour automatisch vorgeschlagen werden. Dies kann dem Prinzip der Streckenklassifizierung folgen, bei dem automatisiert von anderen Fahrzeugen eine Strecke entsprechend deklariert wird und/oder die Informationen im Kartenmaterial hinterlegt sind, z.B. unbefestigte Wege. Beispielsweise können Abschnitte entsprechend der Beschilderung deklariert/markiert sein.

In Fig. 1 hat Fahrer 1 ein Fahrzeug, das beispielsweise wegen seinen Fahrgeräuschen nur auf Strecken ohne Lärmbeschränkung zulässig ist. Er verlässt die gemeinsame Route an Punkt 1 und kommt auf diese an Punkt 3 wieder zurück. Dabei wird die Alternativroute so berechnet, dass er optimalerweise zum gleichen Zeitpunkt an Punkt 3 ankommt, an dem Fahrer 2 & 3 an Punkt 3 ankommen.

Fahrer 2 hat ein Fahrzeug mit limitierter Schräglage, wie beispielsweise ein Chopper Modell. Somit hätte er Schwierigkeiten auf der schwierigen Strecke. Daher verlässt er die gemeinsame Route an Punkt 1 auf die mittelschwere Strecke und kommt auf diese an Punkt 2 wieder zurück. Dabei wird die Alternativroute so berechnet, dass er optimalerweise zum gleichen Zeitpunkt an Punkt 2 ankommt, an dem Fahrer 3 an Punkt 2 ankommt. An Punkt 3 kommen dann alle Fahrer gemeinsam an.

Fahrer 3 hat Tourenfahrzeug mit guter Kurvenlage für enge Kurven, wie beispielsweise die schwierige Strecke. Er verlässt die gemeinsame Route an Punkt 1 und kommt auf diese an Punkt 2 wieder zurück. Optimalerweise zum gleichen Zeitpunkt bei dem Fahrer 2 an Punkt 2 ankommt. An Punkt 3 kommen dann alle Fahrer gemeinsam an.

Die Option für die Fahrer einer Gruppe kann entweder auf eine der beiden Varianten limitiert sein oder jeder Fahrer kann seine gewünschte Methode auswählen, unabhängig davon was die anderen Teilnehmer auswählen. Ziel ist immer der gemeinsame Treffpunkt in Ort und Zeit.

Das System ist vorwiegend zur Kommunikation zwischen Motorradfahrern einer Gruppe über ihre Smartphones ausgelegt und im speziellen für Navigationsfunktionen. Kann aber auch bei Oldtimern, Fahrrädern oder ähnlichem eingesetzt werden.

Weiterhin wird eine optimierte Routenführung für Gruppenfahrten zur vereinfachten Bestimmung und Navigation zum gemeinsamen Treffpunkt vorgestellt.

Hier wird eine Kommunikation von Motorradfahrern untereinander und zur Organisation unterschiedlicher Startpunkte mit gemeinsamer Ankunft an einem Ziel vorgestellt.

Das Ziel kann beispielsweise ein gemeinsamer Startpunkt zu einer Ausfahrt sein. Dabei wird jedem Fahrer individuell für seinen definierten Startort eine entsprechende Startzeit bestimmt, damit alle Fahrer von unterschiedlichen Startpunkten gleichzeitig am Ziel ankommen.

Die Information über den Startpunkt kann z.B. durch die GPS-Position des Smartphones ermittelt werden. Alternativ kann der Startpunkt auch manuell eingegeben werden, falls sich der Fahrer während der Planungsphase an einem anderen Ort befindet als sein späterer Startpunkt.

Damit alle Teilnehmer gleichzeitig an einem definierten Treffpunkt ankommen, werden die Fahrer jeweils auf ihren Startzeitpunkt hingewiesen und benachrichtigt. Dabei kann die geplante gemeinsame Ankunftszeit am Treffpunkt festgelegt werden. Alternativ kann ein frühestmöglicher Startzeitpunkt der Teilnehmer festgelegt werden und so die Ankunftszeit für den Treffpunkt vorgegeben sein.

Wenn der Fahrer auf dem schnellsten Weg am gemeinsamen Treffpunkt ankommen will, wird streckenoptimiert die passende Route bestimmt und der entsprechende Startzeitpunkt errechnet. Damit sind der Startpunkt/Ort und die Fahrzeit bis zum Ziel entscheidend für die Bestimmung des Startzeitpunkts (Uhrzeit).

Wenn der Fahrer bereits früher starten möchte und die Zeit für eine vorgelagerte Tour nutzen will, kann der gewünschte Startzeitpunkt abgefragt werden und eine passende Route bestimmt werden damit die Ankunftszeit am gemeinsamen Treffpunkt eingehalten wird.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines Kraftrads (106) in einer Gruppe (104) von Krafträdern (106), wobei eine für das Kraftrad (106) vordefinierte Einschränkungscharakteristik (108) mit einer Streckencharakteristik (112) von Streckenabschnitten (110) auf einer geplanten Route (102) der Gruppe (104) verglichen wird, wobei für das Kraftrad (106) eine die Einschränkungscharakteristik (108) aufweisende Alternativroute (100) um zumindest einen Streckenabschnitt (110) herum geplant wird, wenn die Streckencharakteristik (112) des Streckenabschnitts (110) und die Einschränkungscharakteristik (108) inkompatibel sind.

2. Verfahren gemäß Anspruch 1, bei dem die Einschränkungscharakteristik (108) unter Verwendung einer ein Fahrkönnen eines Fahrers des Kraftrads (106) abbildenden Fahrerklasse des Fahrers vordefiniert wird.

3. Verfahren gemäß einem der vorhergehenden Ansprüche, bei dem die Einschränkungscharakteristik (108) unter Verwendung einer technische Restriktionen des Kraftrads (106) abbildenden Kraftradklasse des Kraftrads (106) vordefiniert wird.

4. Verfahren gemäß einem der vorhergehenden Ansprüche, bei dem die Alternativroute (100) mit einer Fahrzeit geplant wird, die einer Fahrzeit auf der Route (102) zwischen einem Abzweigpunkt (116) der Alternativroute (100) von der Route (102) und einem Einmündepunkt (118) der Alternativroute (100) in die Route (102) im Wesentlichen entspricht.

5. Verfahren gemäß einem der vorhergehenden Ansprüche, bei dem ferner eine die Einschränkungscharakteristik (108) aufweisende Anfahrtsroute (200) für das Kraftrad (106) zu einem Startpunkt (202) der Route (102) geplant wird

6. Verfahren gemäß Anspruch 5, bei dem ein Abfahrtszeitpunkt (206) zum Beginnen der Anfahrtsroute (200) unter Verwendung eines geplanten Startzeitpunkts (208) der Gruppe (103) auf die Route (102) bestimmt wird.

7. Verfahren gemäß Anspruch 5, bei dem ein Startzeitpunkt (208) der Gruppe (104) auf die Route (102) unter Verwendung eines gewünschten Abfahrtszeitpunkts (206) zum Beginnen der Anfahrtsroute (200) bestimmt wird.

8. Verfahren gemäß einem der Ansprüche 5 bis 7, bei dem ein Abfahrtszeitpunkt (206) zum Beginnen der Anfahrtsroute (200) unter Verwendung einer gewünschten Länge der Anfahrtsroute (200) geplant wird.

9. Verfahren gemäß einem der Ansprüche 5 bis 8, bei dem die Anfahrtsroute (200) mit einem Ankunftszeitpunkt (210) innerhalb eines Toleranzbereichs vor einem geplanten Startzeitpunkt (208) der Gruppe (104) geplant wird.

10. Endgerät zum Betreiben eines Kraftrads (106), wobei das Steuergerät dazu ausgebildet ist, das Verfahren gemäß einem der vorhergehenden Ansprüche in entsprechenden Einrichtungen auszuführen, umzusetzen und/oder anzusteuern.

11. Computerprogrammprodukt, das dazu eingerichtet ist, einen Prozessor bei Ausführung des Computerprogrammprodukts dazu anzuleiten, das Verfahren gemäß einem der Ansprüche 1 bis 9 auszuführen, umzusetzen und/oder anzusteuern.

12. Maschinenlesbares Speichermedium, auf dem das Computerprogrammprodukt gemäß Anspruch 11 gespeichert ist.
